# EUROPÄISCHE PATENTSCHRIFT

(11) **EP 3 552 799 B1**
(45) Veröffentlichungstag und Bekanntmachung des Hinweises auf die Patenterteilung: **05.05.2021**
(21) Anmeldenummer: 19163425.2
(22) Anmeldetag: 18.03.2019
(51) Int. Cl.: B29C 48/325

(54) **WERKZEUGKOPF FÜR EINEN HOHLPROFIL-EXTRUDER**
TOOL HEAD FOR A HOLLOW PROFILE EXTRUDER
TÊTE D'OUTIL POUR EXTRUDEUSE DE PROFILÉS CREUX

(30) Priorität: 28.03.2018 DE 102018204729
(43) Veröffentlichungstag der Anmeldung: 16.10.2019
(73) Patentinhaber: RAUMEDIC AG, 95213 Münchberg (DE)
(72) Erfinder: Silbermann, Martin, 95158 Kirchenlamitz (DE); Schenkel, Martin, 91625 Schnelldorf (DE)
(74) Vertreter: Rau, Schneck & Hübner Patentanwälte Rechtsanwälte PartGmbB

(56) Entgegenhaltungen:
- FR-A1- 2 031 597

## Beschreibung

Die vorliegende Patentanmeldung nimmt die Priorität der deutschen Patentanmeldung DE 10 2018 204 729.4 in Anspruch.

Die Erfindung betrifft einen Werkzeugkopf für einen Hohlprofil-Extruder, insbesondere für einen Schlauch-Extruder. Ferner betrifft die Erfindung eine Wekzeugkopf-Baugruppe mit einem derartigen Werkzeugkopf, einen Extruder mit einem derartigen Werkzeugkopf oder einer derartigen Werkzeugkopf-Baugruppe sowie eine Extrusionsanlage mit einem derartigen Extruder.

Ein Silikonextruder ist bekannt aus der WO 2005/039847 A1. Ein Werkzeugkopf in Form eines Schlauchspritzkopfs ist bekannt aus DE 10 2014 103 521 B3, der EP 0 075 809 A1, der EP 2 768 653 B1 und der DE 197 24 692 A1. Die FR 2 031 597 A1 offenbart den Oberbegriff des Anspruchs 1 oder einen Werkzeugkopf für einen Hohlprofil-Extruder mit einem Extrusions-Ringkanal, der nach außen durch einen Düsenmantel und nach innen durch einen Dorn begrenzt ist. Es ist eine Aufgabe der vorliegenden Erfindung, einen Werkzeugkopf für einen Hohlprofil-Extruder, insbesondere für einen Schlauch-Extruder, derart weiterzubilden, dass die Vorgabe einer Schlauch-Wanddicke in für eine Massenherstellung handhabbarer Form gewährleistet werden kann.

Diese Aufgabe ist erfindungsgemäß gelöst durch einen Werkzeugkopf mit den im Anspruch 1 angegebenen Merkmalen.

Erfindungsgemäß wird eine Vorgabe einer Umfangsverteilung einer Weite des Extrusions-Ringkanals, die einer Umfangsverteilung einer zu extrudierenden Hohlprofil-Stärke, insbesondere einer Schlauchstärke, entspricht, über eine vorgebbare Verkippung des Werkzeugdorns relativ zum Werkzeugring erreicht. Eine Relativposition einer zu extrudierenden Hohlprofil- bzw. Schlauch-Mantelwand, die vorgegeben wird durch die Außenbegrenzung des Extrusions-Ringkanals, also durch die Lage des Werkzeugrings, bleibt unabhängig von der Werkzeugdorn-Kippstellung. Zur Einstellung der Umfangsverteilung der Weite des Extrusions-Ringkanals ist also keine Verlagerung des Werkzeugrings relativ zum Gehäuse erforderlich. Es resultiert eine definierte Lage einer Mantelwand des zu extrudierenden Hohlprofils bzw. Schlauchs unmittelbar nach dem Werkzeugkopf, was für eine nachfolgende Führung beziehungsweise Erfassung des zu extrudierenden Schlauchs insbesondere benachbart zum Werkzeugkopf von Vorteil ist. Hierdurch kann beispielsweise eine sensorische Erfassung von Parametern des Hohlprofils, insbesondere von Parametern des Schlauchs, vereinfacht und/oder verbessert werden. Der Extrusions-Ringkanal kann einer Herzkurve folgen. Ein in den Extrusions-Ringkanal einmündender Materialfließweg für zu extrudierendes Material kann in einem Verteilerkörper ausgebildet sein, der im Kopfgehäuse des Werkzeugkopfes montiert ist. Im Kopfgehäuse kann mindestens ein Kühlkanal zum Kühlen des Werkzeugkopfes angeordnet sein. Das Kippgelenk, über welches der Dornträger relativ zum Werkzeugring kippbar ist, kann gehärtete Oberflächen aufweisen. Das Kippgelenk kann pulvermetallurgisch behandelte Oberflächen aufweisen. Mindestens eine der Oberflächen des Kippgelenks kann eine Gleitbeschichtung aufweisen. Der Werkzeugdorn und/oder der Werkzeugring können als Tauschteile ausgeführt sein. Zur Ausstattung des Werkzeugkopfes kann ein Set mit verschiedenen Paarungen aus jeweils einem Werkzeugdorn und jeweils einem Werkzeugring oder auch ein Set mit jeweils mehreren Werkzeugdornen/Werkzeugringen, die auf einen Werkzeugring/Werkzeugdorn abgestimmt sind, beinhalten.

Eine Halterung des Werkzeugrings vom Axial-Einstell-Gehäusekörper entgegen der Kraftrichtung des Extrusionsdrucks ermöglicht es erfindungsgemäß, über eine Vorgabe einer Axialstellung des Axial-Einstell-Gehäusekörpers eine Axialposition des Werkzeugrings zum Werkzeugdorn vorzugeben. Eine derartige Axialstellungsvorgabe ermöglicht eine Einstellung einer über den Umfang gemittelten Weite des Extrusions-Ringkanals. Der Axial-Einstell-Gehäusekörper kann als Zentriermutter ausgeführt sein. Der Axial-Einstell-Gehäusekörper kann in einer Aufnahme montiert sein, die wiederum am Gehäuse montiert ist.

Eine Ausgestaltung nach Anspruch 2 nutzt eine Hebelwirkung des Dornträgers zur Verkippung des Werkzeugdorns. Ein Abstand der Zentriereinrichtung zum Kippgelenk kann dabei größer sein als ein Abstand zwischen dem Kippgelenk und einem Düsenauslass des Extrusions-Ringkanals. Dieser Abstand kann beispielsweise mehr als das 1, 1-fache , mehr als das 1,2-fache, mehr als das 1,25-fache, mehr als das 1,5-fache, mehr als das 2-fache, mehr als das 3-fache oder auch mehr als das 5-fache des Abstandes zwischen dem Kippgelenk und der Düsenöffnung betragen.

Zentrier-Stellglieder nach Anspruch 3 haben sich zum Einstellen einer Kippposition des Werkzeugdorns bewährt. Die Zentrier-Stellglieder können als Zentrierschrauben ausgeführt sein. Die Zentriereinrichtung kann von einem Zentrierring getragen werden, der seinerseits am Kopfgehäuse montiert ist. Der Zentrierring kann am Verteilerkörper montiert sein. Ein gehäuseseitiges Innengewinde, welches komplementär zum jeweiligen Zentrier-Stellglied ausgeführt ist, kann Bestandteil einer mit dem Kopfgehäuse fest verbundenen Zentrierbuchse sein.

Ein Kugelgelenk nach Anspruch 4 hat sich als Kippgelenk zur stufenlosen Vorgabe der Kippstellung des Werkzeugdorns relativ zum Werkzeugring bewährt. Das Kugelgelenk kann mit einer vorgegebenen Toleranz zwischen den Gelenkteilen, also einem Gelenkkopf beziehungsweise einem Kalottenteil und einer Gelenkpfanne beziehungsweise einem Pfannenteil, ausgeführt sein.

Eine Ausgestaltung nach Anspruch 5 hat sich insbesondere aus Stabilitätsgründen bewährt. Ein Pfannenteil des Kugelgelenks kann gehäuseseitig angeordnet sein. Das Pfannenteil kann in einem im Gehäuse montierten Verteilerkörper und/oder in einem Zentrierring der Zentriereinrichtung oder auch direkt im Kopfgehäuse ausgeführt sein.

Eine Halterung des Werkzeugrings nach Anspruch 6 vermeidet unerwünschte Belastungsspitzen bei der Übertragung des Extrusionsdrucks vom Werkzeugring auf den Axial-Einstell-Gehäusekörper.

Die Vorteile einer Werkzeug-Baugruppe nach Anspruch 7 entsprechen denen, die vorstehend unter Bezugnahme auf den Werkzeugkopf bereits erläutert wurden. Aufgrund der Steuer-/Regeleinrichtung ist es möglich, mit der Werkzeugkopf-Baugruppe bestimmte Parameter des zu extrudierenden Schlauches gesteuert oder geregelt innerhalb vorgegebener Toleranzgrenzen zu halten. Insbesondere eine Closed-Loop-Steuerung kann realisiert werden. Der mindestens eine Aktor der Zentriereinrichtung kann in Form einer oder mehrerer motorisch angetriebener Zentrierschrauben realisiert sein. Der mindestens eine Aktor kann als Schrittmotor ausgeführt sein. Der mindestens eine Aktor kann mit einem Planetengetriebe zusammenwirken. Alternativ oder zusätzlich zur Signalverbindung mit mindestens einem Aktor der Zentriereinrichtung kann die Steuer-Regeleinrichtung auch mit einem Aktor zusammenwirken, der auf den Axial-Einstell-Gehäusekörper zur Verstellung von diesem wirkt. Dies gilt insbesondere dann, wenn der Axial-Einstell-Gehäusekörper als Zentriermutter ausgeführt ist. Der Aktor kann dann eine Verdrehung der Zentriermutter herbeiführen. Auch in dieem Fall kann der Aktor als Schrittmotor ausgeführt sein und kann über ein Planetengetriebe auf die Zentriermutter wirken.

Bei dem Sensor kann es sich um einen Sensor zum Messen einer Wandstärke des mit dem Werkzeugkopfs extrudierten Schlauchs handeln. Der Sensor kann als radiometrischer Sensor, zum Beispiel als Röntgensensor ausgeführt sein. Alternativ oder zusätzlich kann der Sensor als Mikrowellen- oder als Ultraschallsensor ausgeführt sein. Die Steuer-/Regeleinrichtung kann zusätzlich eine Mehrzahl weiterer Eingangsgrößen des Extruders und/oder der Extrusionsanlage erfassen und zur Steuerung und/oder Regelung entsprechender Parameter Stellsignale an Antriebseinheiten beziehungsweise Aktoren des Extruders und der Extrusionsanlage weitergeben. Hierbei hat sich insbesondere die Beibehaltung eines konstanten Beschickungsdrucks als für das Extrusionsergebnis besonders vorteilhaft herausgestellt. Bei den Eingangsgrößen kann es sich um eine Ist-Beschickungstemperatur des Extrusionsmaterials oder auch um einen Austragsdruck der extrudierten Masse im Bereich des Werkzeugkopfes oder auch um eine Austrags-Temperatur handeln.

Die Vorteile eines Extruders nach Anspruch 8 sowie einer Extrusionsanlage nach Anspruch 9 entsprechen denen, die vorstehend unter Bezugnahme auf den Werkzeugkopf und die Werkzeugkopf-Baugruppe bereits erläutert wurden.

Bei der Beschickungsvorrichtung der Extrusionsanlage kann es sich um eine Beschickungsvorrichtung mit einer Beschickungsschnecke und einem Aufgabetrichter handeln. Alternativ kann die Beschickungsvorrichtung gemäß diesem weiteren Aspekt auch anders aufgebaut sein.

Bei dem Extruder kann es sich um einen Silikonextruder und/oder um einen Extruder für ein thermoplastisches Material bzw. für ein Polyolefin-Material handeln. Ein extrudiertes Hohlprofil bzw. ein extrudierter Schlauch kann insbesondere in der Medizintechnik zum Einsatz kommen.

Ein Ausführungsbeispiel der Erfindung wird nachfolgend anhand der Zeichnung näher erläutert. In dieser zeigen:
- Fig. 1: eine perspektivische Ansicht einer Extrusionsanlage mit einem Extruder und einer Beschickungsvorrichtung in einer Beschickungsstellung zum Beschicken des Extruders mit zu extrudierender Masse;
- Fig. 2: schematisch einen Schnitt durch einen Wekzeugkopf des Extruders der Extrusionsanlage nach Figur 1;
- Fig. 3: ein Signalverarbeitungsschema bei einem geregelten Betrieb der Extrusionsanlage.

Eine Extrusionsanlage 1 hat einen Extruder 2 und eine Beschickungsvorrichtung 3 zum Beschicken des Extruders 2 mit zu extrudierender Masse. Bei der zu extrudierenden Masse kann es sich um Silikon handeln. Bei der zu extrudierenden Masse kann es sich auch um ein anderes Material handeln beispielsweise um einen Thermoplasten. Der Extruder 2 ist als Hohlprofil-Extruder und im dargestellten Ausführungsbeispiel als Schlauch-Extruder ausgeführt. Die Beschickungsvorrichtung 3 hat oben einen Aufgabekasten 4, der bodenseitig in einen Aufgabetrichter 5 mündet. Letzterer mündet wiederum in eine bodenseitige Beschickungsöffnung 6. Die Massen-Beschickungsöffnung 6 steht über einem Beschickungskanal 7 mit einer Einzugszone des Extruders 2 in Fluidverbindung.

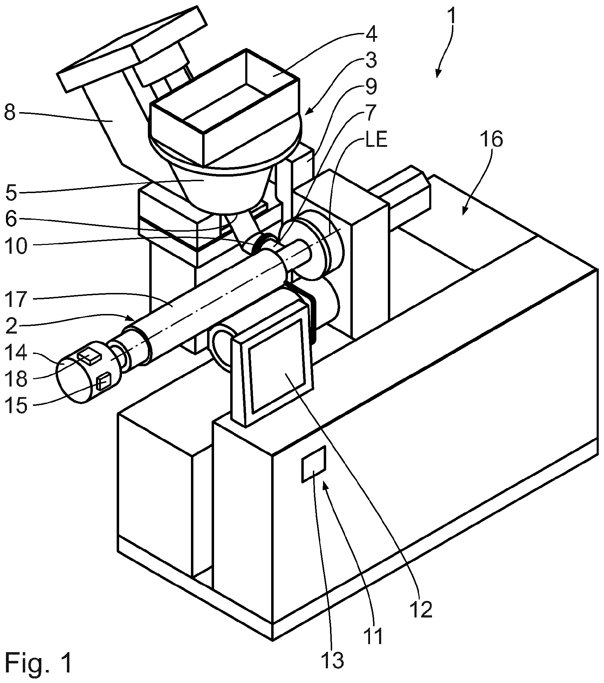

Die Figur 1 zeigt eine Ausführung der Beschickungsvorrichtung mit aufrecht stehendem Aufgabetrichter 5. Eine alternative, nicht dargestellte, Ausführung hat einen schräg stehenden Aufgabetrichter 5.

Der Extruder 2 kann als Einschnecken- oder auch als Doppelschneckenextruder ausgeführt sein.

Teil der Beschickungsvorrichtung 3 ist eine nicht näher dargestellte Beschickungsschnecke. Letztere ist axial und radial an einem Rahmengehäuse 8 der Extrusionsanlage 1 gelagert.

Der Aufgabetrichter 5 ist drehantreibbar ausgeführt. Nahe der Beschickungsöffnung 6 ist der Aufgabetrichter 5 wiederum axial und radial relativ zum Rahmengehäuse 8 gelagert.

Die beiden Drehantriebe für die Beschickungsschnecke einerseits und den Aufgabetrichter 5 andererseits sind voneinander unabhängig ausgeführt. Bei einer alternativen Ausführung der Extrusionsanlage 1 kann auch genau ein gemeinsamer Antrieb für die Beschickungsschnecke einerseits und den Aufgabetrichter 5 andererseits vorhanden sein, wobei ein vorgegebenes Drehzahlverhältnis zwischen einer Beschickungsschneckendrehzahl einerseits und einer Aufgabetrichterdrehzahl andererseits über ein Über- bzw. Untersetzungsgetriebe eines solchen gemeinsamen Antriebs vorgebbar ist. Die Drehantriebe oder der gemeinsame Antrieb für die Beschickungsschnecke und den Aufgabetrichter 5 können als Synchronmotor ausgeführt sein.

Die Beschickungsvorrichtung 3 wird mit Kühlwasser gekühlt, welches in einem Kreislauf geführt sein kann.

Die Figur 1 zeigt die Beschickungsvorrichtung 3 in einer Beschickungsstellung, also in einer Betriebsstellung zum Zuführen der zu extrudierenden Masse über den Aufgabekasten 4, den Aufgabetrichter 5, die Beschickungsöffnung 6 und den Beschickungskanal 7 hin zur Einzugszone des Extruders 2.

Die Beschickungsvorrichtung 3 kann in eine relativ zur Beschickungsstellung der Figur 1 um eine vertikale Schwenkachse ausgeschwenkte und längs dieser Schwenkachse linear nach unten verlagerte Reinigungs- beziehungsweise Wartungsstellung verlagert werden. Diese ausgeschwenkte Reinigungs- beziehungsweise Wartungsstellung ist in der Zeichnung nicht dargestellt. Sowohl die Schwenk- als auch die Verlagerungsbewegung sind in einem Verlagerungs-Rahmenabschnitt 9 des Rahmengehäuses 8 geführt.

Zur Vorbereitung des Ausschwenkens der Beschickungsvorrichtung 3 in die Reinigungs- bzw. Wartungsstellung wird eine Flanschverbindung 10, zwischen zwei Abschnitten des Beschickungskanals 7 gelöst.

Die Extrusionsanlage 1 hat eine zentrale Steuerung 11 mit einem Bedienungsterminal 12. Die Steuerung 11 steht mit den beiden Drehantrieben der Beschickungsschnecke und des Aufgabetrichters 5 in Signalverbindung.

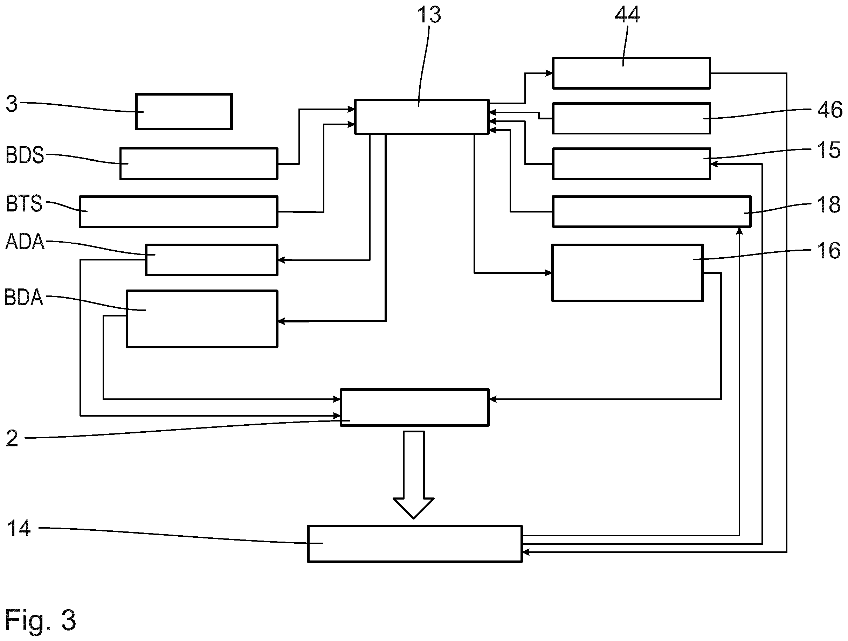

In einem Übergangsbereich zwischen der Beschickungsvorrichtung 3 und dem Extruder 2, also im Bereich des Beschickungskanals 7, ist ein Beschickungs-Drucksensor BDS (vgl. Fig. 3) angeordnet. Letzterer dient zum Messen eines Ist-Beschickungsdrucks der zu extrudierenden Masse. Der Drucksensor BDS ist so angeordnet, dass ein Sensorsignal des Drucksensors BDS zur Regelung eines Drucks der zu extrudierenden Masse direkt vor der Einzugszone des Extruders 2 erzeugt werden kann. Hierzu kann der Drucksensor BDS der Einzugszone direkt benachbart angeordnet sein.

Teil der Steuerung 11 ist eine in der Figur 1 schematisch angedeutete Regeleinheit 13 (vgl. auch das Signalverarbeitungsschema nach Fig. 3), die mit dem Beschickungs-Drucksensor BDS und der Beschickungs-Antriebseinrichtung, also dem Beschickungs-Drehantrieb BDA und/oder dem Aufgabetrichter-Drehantrieb ADA, in Signalverbindung steht. Die Regeleinheit 13 dient zur Vorgabe eines Soll-Beschickungsdrucks und zur Weiterleitung eines Stellsignals an die Beschickungs-Antriebseinheit BDA abhängig von einer ermittelten Differenz zwischen dem Soll-Beschickungsdruck und dem Ist-Beschickungsdruck.

Im Beschichtungskanal 7 ist weiterhin ein Beschickungs-Temperatursensor BTS zum Messen einer Ist-Beschickungstemperatur der zu extrudierenden Masse angeordnet. Der Beschickungs-Temperatursensor BTS steht mit der Regeleinheit 13 in Signalverbindung.

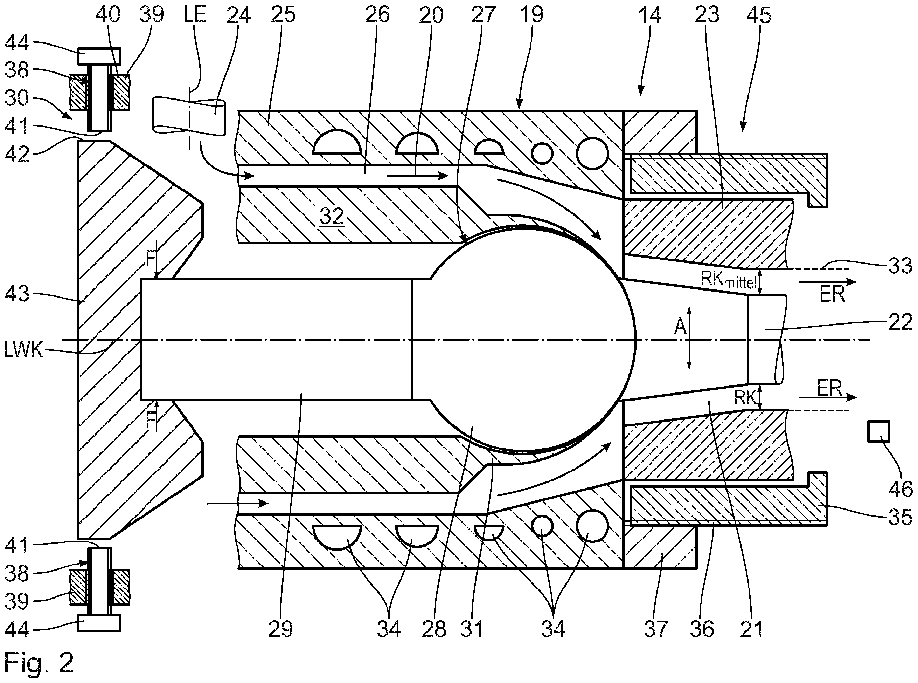

Weiterhin hat die Extrusionsanlage 1 in einem Werkzeugkopf 14 des Extruders 2, der in der Figur 2 stärker im Detail dargestellt und im Bereich einer Austragszone des Extruders 2 angeordnet ist, einen Werkzeugkopf-Drucksensor 15. Letzterer dient zum Messen eines Ist-Austragsdrucks der zu extrudierenden Masse. Die Regeleinheit 13 steht mit dem Werkzeugkopf-Drucksensor 15 und einer Extruder-Antriebseinheit 16 in Signalverbindung. Die Extruder-Antriebseinheit 16 dient zum Antrieb mindestens einer Extruderschnecke, die in einem Gehäusezylinder 17 des Extruders 2 läuft. Die Regeleinheit 13 dient zudem zur Vorgabe eines Soll-Austragsdrucks der zu extrudierenden Masse und zur Weiterleitung eines entsprechenden Stellsignals an die Extruder-Antriebseinheit 16 abhängig von einer ermittelten Differenz zwischen dem Soll-Austragsdruck und dem Ist-Austragsdruck.

Die Extrusionsanlage 1 hat weiterhin einen Austrags-Temperatursensor 18, der ebenfalls im Werkzeugkopf 14 des Extruders 2 angeordnet ist. Der Austrags-Temperatursensor 18 dient zum Messen einer Ist-Austragstemperatur der zu extrudierenden Masse. Der Austrags-Temperatursensor 18 steht mit der Regeleinheit 13 in Signalverbindung.

Fig. 2 zeigt in einem axialen Längsschnitt Details des Werkzeugkopfes 14.

Der Werkzeugkopf 14 hat ein Kopfgehäuse 19, in dem ein Material- beziehungsweise Massenfließweg 20 vorgegeben ist, der austrittsdüsenseitig in einen Extrusions-Ringkanal 21 ausmündet.

Der Extrusions-Ringkanal 21 ist nach innen begrenzt durch einen Werkzeugdorn 22 und ist nach außen begrenzt durch einen Werkzeugring 23. Hin zu einer Austrittsdüse des Werkzeugkopfes 14 sind der Werkzeugdorn 22 und der Werkzeugring 23 nicht vollständig, sondern abgebrochen dargestellt. Im Vergleich zu einer Längsachse LE des Extruders 2 (vgl. Fig. 1) kann eine Längsachse LWK des Werkzeugkopfes 14 fluchtend, parallel oder, wie in der beschriebenen Ausführung senkrecht hierzu verlaufen. Bei der Ausführung nach Fig. 2 verläuft die Längsachse LWK des Werkzeugkopfes 14 also radial zur Längsachse LE des Extruders 2. Ein Materialeinlauf 24 vom Extruder 2 hier verläuft also durch eine Mantelwand 25 des Kopfgehäuses 19, wie in der Fig. 2 schematisch angedeutet.

Dieser Materialeinlauf 24 bildet einen Einlass-Kanal, der mit dem Extrusions-Ringkanal 21 über einen Verteilerkanal 26 und den Materialfließweg 20 in Fluidverbindung steht.

Der Werkzeugdorn 22 wird von einem gehäuseseitigen Dornträger 27 getragen und gehalten. Der Dornträger 27 hat einen kalottenförmigen Dorn-Gelenkabschnitt 28 und einen Kippstangenabschnitt 29. An einem freien Ende des Kippstangenabschnitts 29 des Dornträgers 27, welches von einer Dornseite des Dornträgers 27 mit dem Werkzeugdorn 22 abgewandt ist, ist eine Zentriereinrichtung 30 angeordnet, die nachfolgend noch näher erläutert wird.

Der Dornträger 27 ist über ein Kippgelenk relativ zum Werkzeugring 23 um zwei Freiheitsgrade kippbar gelagert. Das Kippgelenk wird gebildet einerseits durch den Dorn-Gelenkabschnitt 28 als Kalottenteil und einen komplementär hierzu ausgeführten Pfannenabschnitt 31 eines Verteilerkörpers 32, als Pfannenteil. Der Verteilerkörper 32 ist im Kopfgehäuse 19 gehäusefest montiert ist.

Das Kippgelenk 28, 31 ist als Kugelgelenk ausgeführt. Zwischen den beiden Gelenkteilen des Kugelgelenks 28, 31, also dem Dorn-Gelenkabschnitt 28 und dem Verteiler-Pfannenabschnitt 31, kann ein vorgegebenes Bauteil-Spiel, beispielsweise im Bereich zwischen 50 µm und 200 µm ausgeführt sein. Das Kalottenteil des Kugelgelenks 28, 31 also der Dorn-Gelenkabschnitt, kann einstückig an den Kippstangenabschnitt 29 des Dornträgers 27 angeformt sein. Das Kippgelenk 28, 31 kann gehärtete Oberflächen am Dorn-Gelenkabschnitt 28 und/oder am Verteiler-Pfannenabschnitt 31 aufweisen. Hierbei kann es sich um pulvermetallurgisch behandelte Oberflächen handeln. Die Abschnitte 28, 31 des Kippgelenks können eine Gleitbeschichtung aufweisen.

Die Kippbarkeit des Dornträgers 27 relativ zum Werkzeugring 23 über das Kippgelenk 28, 31 ist derart, dass abhängig von der Kippstellung des Dornträgers 27 eine Umfangsverteilung einer Weite RK des Extrusions-Ringkanals 21 zwischen einem düsenseitigen Abschnitts des Werkzeugdorns 22 und dem Werkzeugring 23 vorgebbar ist. Je nach Kippung des Werkzeugdorns 22 über das Kippgelenk 28, 31 ergibt sich also eine vorgebbare Verteilung der Weite RK des Extrusions-Ringkanals 21 in Umfangsrichtung um die Längsachse LWK des Werkzeugkopfes 14. Hierüber ist eine Homogenisierung einer Schlauch-Wanddicke eines mit dem Extruder 2 extrudierten Schlauchs in Umfangsrichtung möglich. Eine Relativposition einer Schlauch-Mantelwand 33, die in der Fig. 2 gestrichelt angedeutet ist, bleibt unabhängig von einer Kippstellung des Kippgelenks 28, 31. Zur Einstellung der Umfangsverteilung der Weite RK des Extrusions-Ringkanals 21 ist eine Verlagerung des Werkzeugrings 23 nicht erforderlich.

Der Materialfließweg 20 zwischen dem Materialeinlauf 24 und dem Extrusions-Ringkanal 21 kann einer Herzkurve folgen. Eine Beschreibung hierzu findet der Fachmann beispielsweise in dem Fachbuch "Handbuch Urformen - Edition Handbuch der Fertigungstechnik" (zweite Auflage, 2003, Carl Hanser Verlag, Herausgeber Bührig-Polaczek et al.).

Im Kopfgehäuse 19 sind mehrere Kühlkanäle 34 ausgeführt, über die ein Kühlfluid zum Kühlen des Werkzeugkopfes 14 fließen kann. Bei dem Kühlfluid kann es sich allgemein um ein Temperierfluid zum Temperieren des Werkzeugkopfes 14, also zum Halten des Werkzeugkopfes 14 auf einer vorgegebenen Temperatur handeln.

Der Werkzeugdorn 22 und/oder der Werkzeugring 23 können als Tauschteile ausgeführt sein. Insbesondere können verschiedene Paarungen aus je einem Typ des Werkzeugdorns 22 und einem Typ des Werkzeugring 23 vorgebbar sein. Zum Lieferumfang des Werkzeugkopfes 14 kann entsprechend ein Set aus mehreren derartigen Paarungen Werkzeugdorn/Werkzeugring gehören.

Der Werkzeugdorn 22 kann lösbar mit dem Dornträger 27, beispielsweise über eine Schraubverbindung, verbunden sein. Der Werkzeugring 23 kann entgegen einer Extrusionsrichtung ER von einem Axial-Einstell-Gehäusekörper 35 gehalten sein. Letzterer kann über ein Gewinde 36 mit einem Einstellabschnitt 37 des Kopfgehäuses 19 verschraubt sein. Der Axial-Einstell-Gehäusekörper 35 kann als Zentriermutter ausgeführt sein. Der Einstellabschnitt 37 stellt eine Aufnahme für den Axial-Einstell-Gehäusekörper 35 dar. Über eine Vorgabe einer Axialposition des Axial-Einstell-Gehäusekörpers 35 relativ zum Kopfgehäuse 19 vorgebbar ist damit eine axiale Position des Werkzeugrings 23 zum Werkzeugdorn 22.

Der Werkzeugring 23 ist schwimmend im Axial-Einstell-Gehäusekörper 35 aufgenommen.

Diese Vorgabe der Axialposition ermöglicht in Verbindung mit einer konischen Formgebung des Werkzeugdorns 22 und/oder des Werkzeugrings 23 im Bereich des Extrusions-Ringkanals 21 die Einstellung einer über den Umfang des Extrusions-Ringkanals 21 gemittelten Weite RK_{Mittel} des Extrusions-Ringkanals 21. Über die mittels des Axial-Einstell-Gehäusekörpers 35 vorgebbare Axialposition des Werkzeugrings 23 relativ zum Werkzeugdorn 22 lässt sich somit eine Wandstärke des zu extrudierenden Schlauchs vorgeben.

Die Zentriereinrichtung 30 hat eine Mehrzahl von Zentrier-Stellgliedern in Form von Zentrierschrauben 38, von denen in der Figur 2 schematisch zwei Zentrierschrauben 38 dargestellt sind. Die Zentrierschrauben 38 verlaufen radial zur Längsachse LWK des Werkzeugkopfs 14 und damit in guter Näherung auch radial zur Längsachse des Dornträgers 27. Die Zentrierschrauben 38 sind am Kopfgehäuse 19 in nicht näher dargestellter Weise gelagert. Hierzu können die Zentrierschrauben 38 in Ringabschnitte 39 eines ansonsten nicht dargestellten Zentrierrings eingeschraubt sein, der seinerseits am Kopfgehäuse 19 und/oder am Verteilerkörper 32 montiert ist. Ein Innengewinde des Ringabschnitts 39 kann auch Bestandteil einer vom Kopfgehäuse 19 separaten und mit diesem fest verbundenen Zentrierbuchse sein, die in der Fig. 2 bei 40 angedeutet ist.

Freie Enden 41 der Zentrierschrauben 38 liegen an einer Umfangswand 42 eines Zentrierkopfes 43 des Dornträgers 27 an. Der Zentrierkopf 43 ist fest mit dem Kippstangenabschnitt 29 des Dornträgers 27 verbunden und kann ein integraler Bestandteil des Kippstangenabschnitts 29 sein. Über eine Einschraubtiefe der Zentrierschrauben 38 in den jeweiligen Zentrierbuchsen 40 kann die jeweilige Kippstellung, also die Lage der Längsachse des Dornträgers 27 zur Längsachse des gesamten Werkzeugkopfes 14, vorgegeben werden. Es können beispielsweise drei oder noch mehr Zentrierschrauben 38 nach Art der in der Fig. 2 dargestellten Zentrierschrauben 38 in Umfangsrichtung insbesondere gleich verteilt um die Längsachse LWK des Werkzeugkopfes 14 herum angeordnet sein, sodass insbesondere eine stufenlose Vorgabe einer Kippstellung des Dornträgers 27 in den beiden Kippfreiheitsgraden möglich ist.

Die Zentrierschrauben 38 können mithilfe entsprechender, jeweils zugeordneter Drehantriebe 44 motorisch angetrieben sein.

Zu einer Werkzeugkopf-Baugruppe 45, deren Bestandteil der Werkzeugkopf 14 ist, kann zusätzlich noch mindestens ein Sensor 46 zum Messen einer Wandstärke des mit dem Werkzeugkopf extrudierten Schlauchs gehören. Der Wandstärken-Sensor 46 kann als radiometrischer Sensor, zum Beispiel als Röntgensensor ausgeführt sein. Sowohl die Drehantriebe 44, die dann Aktoren der Zentriereinrichtung 30 darstellen, als auch der mindestens eine Wandstärken-Sensor 46 stehen mit der Steuerung 11 und der Regeleinheit 13 in Signalverbindung (vgl. auch Fig. 3).

Eine Einstellung der mittleren Weite des Extrusions-Ringkanals 21 kann insbesondere stufenlos mit einer Genauigkeit im Bereich von 1/100 Millimeter erfolgen.

Anstelle eines Röntgensensors kann auch eine sensorische Erfassung über THz-Wellen erfolgen.

Eine Wandstärke eines zu extrudierenden Schlauches kann auf einen vorgegebenen Wert mit einer Toleranz eingestellt werden, die geringer ist als 100 µm, die auch geringer sein kann als 50 µm, die geringer sein kann als 30 µm, die geringer sein kann als 20 µm und auch geringer sein kann als 10 µm.

Bei Varianten der Extrusionsanlage 1 können auch mehrere Beschickungs-Drucksensoren und/oder mehrere Beschickungs-Temperatursensoren und/oder mehrere Werkzeugkopf-Drucksensoren und/oder mehrere Austrags-Temperatursensoren zum Einsatz kommen. Verschiedene Temperatursensoren können insbesondere in verschiedenen Temperaturzonen des Extruders 2 angeordnet sein.

Eine Temperatur in der mindestens einen Temperaturzone im Förderweg der Extrudatmasse der Extrusionsanlage 1 kann über ein Temperiermedium vorgegeben werden. Beispielsweise kann der Aufgabetrichter 5 und/oder der Beschickungskanal 7 und/oder der Extruder 2, gegebenenfalls zonenweise, mit einem Temperiermedium, beispielsweise mit Wasser, aktiv temperiert und insbesondere gekühlt werden.

Eine weitere Regelgröße, die durch Vergleich eines gemessenen Istwertes mit einem vorgegebenen Sollwert über die Regeleinheit 13 konstant gehalten werden kann, ist ein Materialdurchsatz im Förderweg der Extrusionsanlage 1. Dieser Durchsatz kann an verschiedenen Stellen des gesamten Förderwegs zwischen der Beschickungsvorrichtung 3 und dem Werkzeugkopf 14 gemessen werden.

Bei der Extrusion mit der Extrusionsanlage 1 wird die zu extrudierende Masse zunächst in die Beschickungsvorrichtung 3 aufgegeben. Anschließend wird die zu extrudierende Masse durch die Beschickungsvorrichtung 3 und den Extruder 2 hindurchgefördert. Das erzeugte Extrudat wird dann in Profil- bzw. Schlauchform über den Werkzeugkopf 14 aus dem Extruder 2 ausgetragen. Bei einem geregelten Betrieb der Extrusionsanlage 1 erfolgt ein geregeltes Fördern der Masse durch die Beschickungsvorrichtung 3 und den Extruder 2 unter Einsatz der Stellsignale der Regeleinheit 13. Diese Stellsignale der Regeleinheit 13 können auf den Aufgabetrichter-Drehantrieb ADA und/oder auf den Schnecken-Drehantrieb BDA und/oder auf die Extruder-Antriebseinheit 16 und/oder auf Stellkomponenten des Werkzeugkopfes 24, wie zum Beispiel die Aktoren 44 der Zentriereinrichtung 30 wirken. Abhängig von den Sensormessungen lässt sich also beispielsweise eine Rotationsgeschwindigkeit des Aufgabetrichters 5, eine Drehgeschwindigkeit der Beschickungsschnecke und/oder eine Schneckengeschwindigkeit des Extruders 2 vorgeben beziehungsweise es lassen sich Stellgrößen einstellbarer Komponenten des Werkzeugkopfes 24 wie die Umfangsverteilung und/oder der Mittelwert der Weite RK des Extrusions-Ringkanals 21 vorgeben. Antriebe der Extrusionsanlage 1, besonders die Drehantriebe 10, 15, 44 sowie der Extrusionsantrieb 16, können stufenlos regelbar ausgeführt sein.

Anstelle einer Ausführung der Zentriereinrichtung 30 mit Zentrierschrauben kann eine Kippstellungs-Vorgabe im Bereich des Zentrierkopfes 43 auch über linear angetrieben verlagerbare Hubkolben erfolgen. Antriebe der Zentriereinrichtung können als Elektromotoren oder als Hydraulikzylinder ausgeführt sein.

Eine Kühlung des Werkzeugkopfes 14 kann gesteuert oder geregelt und insbesondere abhängig vom Materialdurchsatz, von einer Shore-Härte des Materials sowie abhängig von der jeweiligen Auslegung des Materialfließwegs 20 einerseits im Bereich des Verteilerkörpers 32 und andererseits im Bereich des düsenseitigen Austritts beim Extrusions-Ringkanal erfolgen.

## Patentansprüche

1. Werkzeugkopf (14) für einen Hohlprofil-Extruder (2),
- mit einem Kopfgehäuse (19),
- mit einem Extrusions-Ringkanal (21), der nach innen begrenzt ist durch einen Werkzeugdorn (22) und der nach außen begrenzt ist durch einen Werkzeugring (23),
- wobei der Werkzeugdorn (22) von einem gehäuseseitigen Dornträger (27) getragen und gehalten wird,
- wobei der Dornträger (27) über ein Kippgelenk (28, 31) relativ zum Werkzeugring (23) um zwei Freiheitsgrade kippbar gelagert ist, sodass abhängig von der Kippstellung des Dornträgers (27) eine Umfangsverteilung einer Weite des Extrusions-Ringkanals (21) vorgebbar ist,
- mit einer Zentriereinrichtung (30) zur Vorgabe der Kippstellung des Dornträgers (27),
- wobei der Werkzeugring (23) entgegen einer Kraftrichtung eines Extrusionsdrucks von einem Axial-Einstell-Gehäusekörper (35) gehalten ist,
- **dadurch gekennzeichnet, dass** der Axial-Einstell-Gehäusekörper (35) derart ausgeführt ist, dass über eine Vorgabe einer Axialposition des Axial-Einstell-Gehäusekörpers (35) relativ zum Kopfgehäuse (19) eine axiale Position des Werkzeugrings (23) zum Werkzeugdorn (22) vorgegeben ist.

2. Werkzeugkopf nach Anspruch 1, **dadurch gekennzeichnet, dass** das Kippgelenk (28, 31) dornseitig am Dornträger (27) angeordnet ist, wobei an einem freien Ende des Dornträgers (27), das von einer Dornseite des Dornträgers (27) abgewandt ist, die Zentriereinrichtung (30) angeordnet ist.

3. Werkzeugkopf nach Anspruch 1 oder 2, **dadurch gekennzeichnet, dass** die Zentriereinrichtung (30) eine Mehrzahl von zum Dornträger (27) radial verlaufenden Zentrier-Stellgliedern (38) hat, die gehäuseseitig gelagert sind und deren freie Enden (41) am Dornträger (27) anliegen.

4. Werkzeugkopf nach einem der Ansprüche 1 bis 3, **dadurch gekennzeichnet, dass** das Kippgelenk (28, 31) als Kugelgelenk ausgeführt ist.

5. Werkzeugkopf nach Anspruch 4, **dadurch gekennzeichnet, dass** ein Kalottenteil (31) des Kugelgelenks (28, 31) einstückig an den Dornträger (27) angeformt ist.

6. Werkzeugkopf nach einem der Ansprüche 1 bis 5, **dadurch gekennzeichnet, dass** der Werkzeugring (23) vom Axial-Einstell-Gehäusekörper (35) schwimmend gehaltert ist.

7. Werkzeugkopf-Baugruppe
- mit einem Werkzeugkopf (14) nach einem der Ansprüche 1 bis 6,
- mit mindestens einem Sensor (46) zum Messen einer Wandstärke eines mit dem Werkzeugkopf (14) extrudierten Schlauchs,
- mit einer Steuer-/Regeleinrichtung (11, 13), die in Signalverbindung steht
-- mit dem Sensor (46) und
-- mit mindestens einem Aktor (44) der Zentriereinrichtung (30).

8. Extruder (2) mit einem Werkzeugkopf (14) nach einem der Ansprüche 1 bis 6 oder mit einer Werkzeug-Baugruppe nach Anspruch 7.

9. Extrusionsanlage (1) mit einem Extruder nach Anspruch 8 und mit einer Beschickungsvorrichtung (3) zum Beschicken des Extruders (2) mit zu extrudierendem Material.

## Claims

1. Die (14) for a hollow-section extruder (2),
- with a die housing (19),
- an extrusion annulus (21) bounded inwardly by a mandrel (22) and bounded outwardly by a die ring (23),
- wherein the mandrel (22) is carried and held by a mandrel support (27) on a side of the housing,
- wherein the mandrel support (27) is tiltably mounted relative to the die ring (23) by two degrees of freedom by a tilt joint (28, 31), whereby, depending on a tilt position of the mandrel support (27), a circumferential distribution of a width of the extrusion annulus (21) can be adjusted,
- with a centering device (30) for adjusting the tilt position of the mandrel support (27),
- wherein the die ring (23) is held by an axial adjustment housing body (35) against a force direction of an extrusion pressure,
**characterized in that**
the axial adjustment housing body (35) is designed such that by defining an axial position of the axial adjustment housing body (35) relative to the die housing (19) an axial position of the die ring (23) to the mandrel (22) is defined.

2. Die as claimed in claim 1, **characterized in that** the tilt joint (28, 31) is arranged on a side of the mandrel support (27) facing the mandrel, wherein the centering device (30) is arranged at an opposite free end of the mandrel support (27) facing away from the mandrel .

3. Die as claimed in claim 1 or 2, **characterized in that** the centering device (30) comprises a plurality of centering actuators (38) supported at the die housing and extending radially to the mandrel support (27), the centering actuators (38) having free ends (41) which abut the mandrel support (27).

4. Die as claimed in one of claims 1 to 3, **characterized in that** the tilt joint (28, 31) is designed as a ball joint.

5. Die as claimed in claim 4, **characterized in that** a dome-shaped part (31) of the ball joint (28, 31) is formed on the mandrel support (27) in one piece.

6. Die as claimed in one of claims 1 to 5, **characterized in that** the die ring (23) is floatingly supported by the axial adjustment housing body (35).

7. Die assembly,
- with a die (14) as claimed in one of claims 1 to 6,
- with at least one sensor (46) for measuring a wall thickness of a tube extruded with the die (14),
- with a control device (11, 13) which is in signal communication
-- with the sensor (46) and
-- with at least one actuator (44) of the centering device (30).

8. Extruder, comprising the die (14) as claimed in one of claims 1 to 6 or a die assembly as claimed in claim 7.

9. Extrusion line, comprising an extruder as claimed in claim 8 and a feeder (3) for feeding the extruder (2) with material to be extruded.

## Revendications

1. Tête d'outil (14) pour une extrudeuse de profilés creux (2),
- avec un logement de tête (19),
- ayant un canal annulaire d'extrusion (21) qui est délimité vers l'intérieur par un mandrin d'outil (22) et qui est délimité vers l'extérieur par un anneau d'outil (23),
- dans laquelle le mandrin d'outil (22) est supporté et retenu par un porte-mandrin (27) du côté du logement,
- dans laquelle le porte-mandrin (27) est monté de manière à pouvoir basculer de deux degrés de liberté par rapport à l'anneau d'outil (23) au moyen d'une articulation de basculement (28, 31), de sorte qu'une répartition périphérique d'une largeur du canal annulaire d'extrusion (21) peut être prédéfinie en fonction de la position de basculement du porte-mandrin (27),
- avec un dispositif de centrage (30) pour prérégler la position de basculement du porte-mandrin (27),
- dans laquelle l'anneau d'outil (23) est tenu contre une direction de force d'une pression d'extrusion par un corps de logement de réglage axial (35),
**caractérisée en ce que**
le corps de logement de réglage axial (35) est conçu de telle sorte qu'une position axiale de l'anneau d'outil (23) par rapport au mandrin d'outil (22) est prédéterminée par le biais d'un préréglage d'une position axiale du corps de logement de réglage axial (35) par rapport au logement de tête (19).

2. Tête d'outil selon la revendication 1, **caractérisée en ce que** l'articulation de basculement (28, 31) est disposée sur le côté mandrin du porte-mandrin (27), dans laquelle sur une extrémité libre du porte-mandrin (27), détourné du côté mandrin du porte-mandrin (27), le dispositif de centrage (30) est disposé.

3. Tête d'outil selon la revendication 1 ou 2, **caractérisée en ce que** le dispositif de centrage (30) présente une pluralité d'actionneurs de centrage (38) s'étendant radialement par rapport au porte-mandrin (27), qui sont montés du côté du logement et dont les extrémités libres (41) s'appuient contre le porte-mandrin (27).

4. Tête d'outil selon l'une quelconque des revendications 1 à 3, **caractérisée en ce que** l'articulation de basculement (28, 31) est conçue comme une articulation à rotule.

5. Tête d'outil selon la revendication 4, **caractérisée en ce qu'**une partie calotte (31) de l'articulation à rotule (28, 31) est formée d'un seul tenant sur le porte-mandrin (27).

6. Tête d'outil selon l'une quelconque des revendications 1 à 5, **caractérisée en ce que** l'anneau d'outil (23) est supporté de manière flottante par le corps de logement de réglage axial (35).

7. Ensemble de tête d'outil
- avec une tête d'outil (14) selon l'une quelconque des revendications 1 à 6,
- avec au moins un capteur (46) pour mesurer une épaisseur de paroi d'un tuyau extrudé avec la tête d'outil (14),
- avec un dispositif de commande/réglage (11, 13) qui est en liaison de signalisation
- avec le capteur (46) et
- avec au moins un actionneur (44) du dispositif de centrage (30).

8. Extrudeuse (2) comprenant une tête d'outil (14) selon l'une quelconque des revendications 1 à 6, ou comprenant un ensemble d'outils selon la revendication 7.

9. Installation d'extrusion (1) avec une extrudeuse selon la revendication 8 et avec un dispositif d'alimentation (3) pour alimenter l'extrudeuse (2) avec de la matière à extruder.
